# EUROPEAN PATENT APPLICATION

(11) **EP 3 925 769 A1**
(43) Date of publication of application: **22.12.2021**
(21) Application number: 21179796.4
(22) Date of filing: 16.06.2021
(51) Int. Cl.: B32B 1/02, B32B 1/08, B32B 7/12, B32B 27/08, B32B 27/30, B32B 27/32, B32B 27/34, B32B 27/36, C08J 5/18

(54) **LAMINATE**

(30) Priority: 18.06.2020 EP 20180960
(71) Applicant: Flexopack S.A., 194 00 Koropi (GR)
(72) Inventor: GINOSATIS, Dimitris, 19400 Koropi Attica (GR)
(74) Representative: Isarpatent

(57) **Abstract**

The present invention describes a laminate comprising a polyester sheet laminated to a plastic film comprising polyethylene, wherein the film comprises ethylene ester copolymer and wherein the adhesion force between the polyester sheet and the film is in the range of 30-150 grams per 15mm measured according to ASTM F88.

## Description

The invention relates to a laminate comprising a polyester sheet laminated to a plastic film comprising polyethylene, where the adhesion force between the polyester sheet and the film is in the range of 30-150 grams per 15mm and where the film comprises ethylene ester copolymer

### BACKGROUND

Plastic containers have been increasingly used in packaging applications, such as "food packaging". A typical food packaging container is a tray or a rigid sheet that may be thermoformed during or before the food packaging process. Such products may comprise polyester (e.g. APET or CPET trays or sheets, PP trays or sheets and others as well known in the art).

Due to the need for oxygen barrier properties when oxygen sensitive food is packed, the sheets or trays may be based on a laminate of two or more materials. Often this laminate is of the structure APET//PE layer or APET//PE/Tie/EVOH/Tie/PE layers. The PE (polyethylene) is preferred as having much better heat sealing properties and thus better air tightness of the pack versus mono materials like APET.

The bonding between APET and the rest of the structure (which is often coextruded) is done by different lamination processes well known in the art, for example adhesive lamination, thermal lamination, extrusion coating and the like.

In the food packaging art, two further packaging concepts are well known, modified atmosphere (MAP) packaging and vacuum skin packaging.

In MAP packaging, inside the aforementioned sheet or tray a food product is firstly inserted. Then, a lidding film is sealed at the top side of the tray or thermoformed sheet while the ambient air inside the pack is evacuated and a special mixture of gas (or a single gas) is inserted. There are special mixtures of gases (most often different combinations of oxygen, nitrogen and carbon dioxide) recommended for each food to be packed. This packaging concept allows shelf life extension of the food and very nice optical appeal. Such packs can be seen in every supermarket throughout the globe.

The vacuum skin packaging in general involves two packaging containers:
1. The top lid film which conform onto the product
2. The bottom thermoformable film which is formed into a tray during the first step of the packing process and where-into the food is placed prior to the vacuum step. Often, a ready-made tray is used instead of a bottom thermoformable film.

The advantages of vacuum skin packaging are again shelf life extension and nice optical appeal.

In both these well-known processes, the thermoformed sheet or tray is often of the structure APET//PE or APET//PE/Tie/EVOH/Tie/PE. Here, as well as in the art, the double line "//" signifies a lamination process and the single line "/" or "-" signifies a coextrusion process.

In the prior art, it is important that the bonding force between the APET and the coextruded part PE or the coextruded part PE/TIE/EVOH/TIE/PE must be the maximum possible. This is a target in order to avoid seal failures during the packaging process and also other failures during transportation of the material.

During the recent years, with the advent of the sustainability concept, it is important for the consumer to be able to separate different plastic materials and put them in each proper waste collection stream. So, it is important that materials like APET are separated from PE, other polyolefins and similar materials.

### SUMMARY OF THE INVENTION

The present invention describes a sheet comprising polyester laminated to a plastic film comprising polyethylene (preferably by thermal lamination or adhesive lamination process process), where the adhesion force between the polyester sheet and the film is in the range of 30-150 grams per 15mm (as measured with ASTM F88) and where the film comprises ethylene ester copolymer.

### DEFINITIONS

In this application the following definitions are used:
The term "vacuum skin packaging" is interpreted as well known in the art. That is, a process where a top lid film is drawn so that it conforms to the product to be packed and seals at a bottom film or tray.

Vacuum skin packaging is described in many references such as FR1258357, FR1286018, AU3491504, USRE30009, US3574642, US3681092, US3713849, US4055672, US 5346735, WO2009141214, EP2722279 and EP2459448.

The term "film" refers to a flat or tubular flexible structure of thermoplastic material, with thickness of up to 300 microns. Films with thickness of more than 300 microns are referred as "sheets" in this invention.

As used herein the term "top lidding film" refers to the film which conforms to the product during the vacuum skin packaging or MAP process. It is also called "top film".

The term "heat shrinkable" refers to a film that shrinks at least 10% in at least one of the longitudinal and transverse directions when heated at 90°C for 4 seconds. The shrinkability is measured according to ASTM 2732.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

The phrase "lamination layer" refers to the film or the sheet layer which is in direct contact with the other film or sheet to be laminated.

The phrase "intermediate layer" refers to any layer of the film that is neither outer nor inner layer. A film may comprise more than one intermediate layers.

As used herein, the term "homopolymer" refers to a polymer resulting from polymerization of a single monomer.

As used herein, the term "copolymer" refers to a polymer resulting from polymerization of at least two different monomers.

As used herein, the term "polymer" includes both above types.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra-low density polyethylene (ULDPE), metallocene catalyzed polymers and polyethylene plastomers and elastomers. In the art, it is often considered that LLDPE has a density of roughly 0.917-0,930, a medium density polyethylene of 0.930-0.945, a very low density polyethylene 0.905-0.917 and an ultra-low density polyethylene of lower than 0.905.

In these cases the alpha olefin can be propene, butene, hexene, octene etc as known in the art.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the term "ethylene ester copolymer" refers to ethylene vinyl acetate (EVA), ethylene methyl acrylate (EMA), ethylene ethyl acrylate (EEA), ethylene butyl acrylate (EBA), ethylene methyl methacrylate (EMMA) and other similar copolymers.

As used herein the phrase "ethylene methacrylate copolymers" or "ethylene methyl acrylate" refers to copolymers of ethylene and methacrylate monomer. The monomer content is less than 40%. Abbreviation used is EMA.

As used herein the phrase "ethylene vinyl acetate copolymer" refers to copolymers of ethylene and vinyl acetate. Abbreviation used is EVA.

As used the term "crosslinked EVA" refers to copolymers of ethylene and vinyl acetate which have created crosslink structure. This is achieved often by radiation or by using peroxides. The crosslinking is usually done during extrusion of the film or at a later stage.

As used herein, the term EVOH refers to saponified products of ethylene vinyl ester copolymers. The ethylene content is typically in the range of 25 mol% to 50 mol%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term polyamide refers to homopolymers and copolymers.

As used herein the term "ionomer" refers to ethylene-acid copolymers which have been neutralized by metals such as sodium, zinc, lithium or others.

The acid used is usually methacrylic or acrylic acid.

As used herein, the term "ethylene acid copolymer " refers to copolymers of ethylene with acid, most usually methacrylic or acrylic acid.

As used herein, the term "polyester" refers in general to homopolymers or copolymers that have an ester linkage between monomer units. The term includes crystalline polymers, amorphous polymers and polyester elastomers. Common polyesters are crystalline PET (polyethylene terephthalate), amorphous PET, PETG (glycol modified polyethylene terephthalate), PBT (polybutylene terephthalate), PTT (polytrimethylene terephthalate), PBN (polybutylene naphthalate), PEN (polyethylene naphthalate), polyester-ether block copolymers and polyester-ester block copolymers of hard and soft blocks.

The ester monomer unit may be represented by the general chemical formula R-C(O)O-R' where R and R' is an alkyl group and may be generally formed from the polymerization of dicarboxylic acid and diol monomers or monomers containing both carboxylic acid and hydroxyl moieties.

As used herein the term "polybutylene" refers to butene-1 homopolymers and copolymers. Useful copolymers comprise ethylene mer units. Ethylene content should be generally less than 50%.

As used herein, the term "oriented" refers to a thermoplastic web, which has been elongated, at a temperature above the softening temperature, in either one direction ("uniaxial") or two directions ("biaxial"), followed by cooling the film to "set" it while substantially retaining the elongated dimensions. As used herein, the term "oriented" or "biaxially oriented" or "stretched" refers to orientation from the solid state. On the contrary, any reference to "hot blown film" means orientation from the melt state, as well known in the art.

In the present invention, both the melting point and the glass transition temperature of the polyester material are measured as per ASTM D3418 as well known in the art.

In the present invention, the term "lamination" refers to any method of bonding two different sheets or films, or a sheet and a film or more.

In the present invention the term "adhesive lamination" refers to a lamination process where an adhesive is used to bond the different films or sheets. The adhesive lamination can be solvent base or solvent less as well known in the art.

In the present invention the term "thermal lamination" refers to a lamination process where the adhesion of the films or sheets is done by heating and pressing the two films or sheets together. This is often done in heated nip pressure rollers, where the rollers are heated by inside circulating hot water or other heating elements.

In the present invention the term "laminate" refers to the end product of the lamination process. For example the laminate of a polyester sheet and polyethylene film is an APET//PE laminate.

In the present invention the term "adhesion force" or "lamination force" or "bonding force" of the laminate refers to the force needed to separate the film from the sheet. It is measured as per ASTM F88 using 15mm stripes and expressed in grams per 15mm.

The term "coextrusion" or "coextruded" as used herein and well known in the art refers to a film consisting of at least two different layers comprising different plastic materials and extruded simultaneously from the same die.

The term "cast film" or "cast sheet" refers to a film or sheet produced by a cast process i.e. a process of a flat die which also includes fast quenching of the film or sheet.

Unless otherwise indicated percentages indicated herein are percentages by weight (wt.-%).

### DETAILED DESCRIPTION OF THE INVENTION

The present invention describes a sheet comprising polyester laminated to a plastic film comprising polyethylene (preferably by thermal lamination or adhesive lamination process process), where the lamination adhesion force between the polyester sheet and the film is in the range of 30-150 grams per 15mm (as measured with ASTM F88) and where the film comprises ethylene ester copolymer.

In a preferable embodiment, the polyester comprising sheet is amorphous polyester sheet (APET) as well known in the art.

In a preferable embodiment, the polyester resin used for production of the APET sheet has a glass transition temperature of at least 40 °C.

In a further preferable embodiment, the polyester has an intrinsic viscosity (IV) at least 0.65, as measured by ASTM D5225.

In a further preferable embodiment, the plastic film comprises an oxygen barrier material, preferable EVOH.

In a further preferable embodiment, the film comprises ethylene ester copolymer in the layer which is directly bonded to the polyester comprising sheet.

In a further preferable embodiment, the film comprises ethylene vinyl acetate copolymer in the layer which is directly bonded to the polyester comprising sheet.

In a further preferable embodiment, the film is produced by the hot blown film process and is not stretched.

In a further preferred embodiment, the film is thermally laminated to the polyester sheet.

In a further preferred embodiment the film thickness is less than 100 microns, more preferably less than 80 microns, more preferably less than 50 microns.

In a further preferred embodiment, the laminate of the film and the sheet is used in a MAP process or a vacuum skin packaging process and seals to a top lidding film.

In a further preferred embodiment, the sealing force of the laminate to the top lidding film is at least three time stronger than the lamination force, more preferably four times, more preferably five times more.

In a further preferred embodiment, the lamination adhesion force is between 50 and 120 grams per 15 mm.

### FILM CONSTRUCTION

Preferably the film comprises 5 to 15 layers, more preferably 7 to 12 layers.

A typical example of the film construction in 7 layer mode is

Lamination layer/intermediate layer/tie layer/barrier layer/tie layer/intermediate layer/inner layer

The film is preferably produced by the hot blown film method and is not heat shrinkable.

### Barrier laver(s)

The film in a preferable embodiment contains high oxygen barrier materials so that it protects the components of the pack from the detrimental effect of oxygen ingress. EVOH is a preferred option but also polyamide and PVDC are viable alternatives. The EVOH preferably comprises 24% mol to 50% mol ethylene, more preferably 27% mol to 48% mol.

### Intermediate layer(s)

Preferably, the intermediate layers comprise EVA or ethylene alpha olefin copolymers. The EVA can be alone in this layer or in a form of blend or compound. Suitable blending partners for the EVA include EMA, ethylene alpha olefin copolymers, styrene polymers, LDPE and others.

The vinyl acetate content of the EVA used in the intermediate layers is 3 to 90% by weight, preferably 5 to 80 % by weight. Preferred melt flow indexes are 0.3 to 5 measured at 190C, 2.16 kilos.

In a further preferred version, the film comprises at least 30% per weight ethylene alpha olefin copolymers with density less than 0.920 g/cm3.

### Tie layer(s)

As well known in the art, there is no natural adhesion between polyolefins such as EVA and high barrier polymers such as EVOH. Therefore, suitable adhesive resins must be used so that the film does not collapse under the oven heating.

Suitable materials for the tie layer process include maleic anhydride modified EVA, maleic anhydride modified polyethylene, maleic anhydride modified EMA, maleic anhydride modified elastomer, partially saponified EVA copolymer and polyurethane elastomer.

### Lamination layer

The lamination layer of the film comprises preferably ethylene ester copolymer, preferably EVA and/or EMA. Preferably the melting point of the ethylene ester copolymer is less than 100°C. In a further preferable version the lamination layer comprises an ethylene vinyl acetate copolymer comprising 5-20% per weight vinyl acetate.

### Sealing layer

The sealing layer of the film comprises any well know sealing layer, such as different ethylene alpha olefin copolymers, low density polyethylene, ethylene ester copolymers or ionomers. The sealing layer is preferably sable to seal strongly to the sealing layer of the top lidding film, so that the delamination of the APET sheet from the polyethylene comprising film is easy.

In a preferable version, the sealing strength of the laminate to the top lidding film is at least 1500 grams per 15mm, as measured by the ASTM D882.

In general, the above layers may comprise further well known in the art additives such as antiblock, slip, antifog, polymer processing enhancers and others.

### Polyester sheet

The polyester sheet used as per the invention is produced preferably by a cast (flat die) process, as well known in the art.

Preferably the Polyester sheet is a APET sheet. The thickness of the polyester, preferably APET sheet is at least 200 microns, more preferably at least 250 microns, more preferably at least 300 microns. For the sake of understanding we used the term "sheet" for the polyester, even for thicknesses of less than 300 microns.

### EXAMPLES

### EXAMPLE 1

From a commercial hot blown film line we produced the following film
*Lamination layer, thickness 10 microns
*Intermediate layer 1, thickness 5 microns
*Tie layer 1, thickness 4 microns
*EVOH, thickness 8 microns
*Tie layer 2, thickness 4 microns
*Intermediate layer 2, thickness 10 microns
*Inner sealing layer, thickness 19 microns.

The layers are as follows

Lamination layer is composed of an ethylene vinyl acetate copolymer including 9% per weight vinyl acetate and melt flow index of 3 as measured at 190°C, 2.16 kilos as measured according to ASTM D1238.

Intermediate layer 1 is anhydride modified ethylene alpha olefin copolymer, grade Admer 1955 from Mitsui.

Tie layer 1 and 2 are of a blend of 70% Attane SL4100 VLDPE from Dow Chemical and 30% Bynel 41E710 (modified anhydride LLDPE) from Dow Chemical.

Intermediate layer 2 is an ethylene vinyl acetate copolymer having 18% per weight vinyl acetate and melt flow index 0.5 measured at 190C and 2.16 kilos as per ASTM 1238.

Sealing layer comprises a low density polyethylene, having a density of 0.923 and a melt flow index of 0.7 measured under 190C and 2.16 kilos according to ASTM D1238.

The EVOH layer comprised the grade EVAL H171 B which is a 38% mol ethylene grade.

### EXAMPLE 2

From a commercial hot blown film line we produced the following film
*Lamination layer, thickness 10 microns
*Intermediate layer 1, thickness 3 microns
*Tie layer 1, thickness 4 microns
*EVOH, thickness 6 microns
*Tie layer 2, thickness 4 microns
*Intermediate layer 2, thickness 5 microns
*Inner sealing layer, thickness 10 microns.

The layers are as follows

Lamination layer is ethylene vinyl acetate, comprising 18% per weight vinyl acetate and having a melt flow index of 0.5 measured at 190°C and 2.16 kilos as per ASTM D1238.

Intermediate layer 1 is anhydride modified ethylene alpha olefin copolymer, grade Admer 1955 from Mitsui.

Tie layer 1 and 2 are of a blend of 70% Attane SL4100 VLDPE from Dow Chemical and 30% Bynel 41E710 (modified anhydride LLDPE) from Dow Chemical.

The EVOH layer comprised the grade EVAL H171 B which is a 38% mol ethylene grade.

Intermediate layer 2 is an ethylene vinyl acetate copolymer having 18% per weight vinyl acetate and melt flow index 0.5 measured at 190C and 2.16 kilos as per ASTM 1238.

Sealing layer is an ethylene vinyl acetate copolymer having 14% per weight vinyl acetate melt flow index 0.35 measured at 190C and 2.16 kilos as per ASTM D1238.

### TEST PROCEDURE

For measuring both the sealing and lamination forces, ASTM F88 is followed.

Laboratory instrument used to measure the lamination force is Instron trademark.

### TESTRESULTS

An APET sheet was firstly thermally laminated to the film of example 1 and example 2.

The thermal lamination process took place by passing the film and the sheet through a hot water heated nip roller with measuring external temperature of 60°C.

The bonding as measured was 60grams per 15mm in the case of the film of example 1 and 85 grams per 15mm in the case of example 2.

A laminate of APET sheet and PE-TIE-EVOH-TIE-PE sheet was retrieved from the market and the bonding adhesion force was measured to be 350 grams/15mm. This based on the applicants knowledge, represents the usual bonding adhesion force measured in the laminated used in today market.

Then, the three laminates were tested in a Sealpac vacuum skin packaging machine, having as top lidding film the commercial material FLEXION 100CER N1. Temperatures used were 180°C pregeta temperature and 200°C die temperature.

In the case of laminates as per the examples 1 and 2 the "consumer" by opening the pack immediately can detach the polyester sheet from the coextruded part containing PE and EVOH. The "consumer" could easily separate the two materials in different waste streams.

In the example 3 there was no practical way to delaminate the APET sheet from the coextruded part.

## Claims

1. A laminate comprising a polyester sheet laminated to a plastic film comprising polyethylene, wherein the film comprises ethylene ester copolymer and wherein the adhesion force between the polyester sheet and the film is in the range of 30-150 grams per 15mm measured according to ASTM F88.

2. The laminate according to claim 1, wherein the film comprises polyethylene in a sealing layer.

3. The laminate according to any one of the preceding claims, wherein the film is produced by a hot blown film process.

4. The laminate according to any one of the preceding claims, wherein the film is not oriented.

5. The laminate according to any one of the preceding claims, wherein the film comprises a further layer comprising an oxygen barrier material.

6. The laminate according to any one of the preceding claims, where the film comprises ethylene alpha olefin copolymer.

7. The laminate according to any one of the preceding claims, wherein the film comprises ethylene vinyl acetate.

8. The laminate according to any one of the preceding claims, where the film further comprises an external layer of EVA and/or EMA.

9. Use of the laminate according to any one of the preceding claims as vacuum skin packaging film.

10. Use of laminate according to any one of claims 1 to 8 in modified atmosphere packaging (MAP) applications.

11. A vacuum skin package comprising a laminate according to any one of claims 1-8.

12. A vacuum skin package or modified atmosphere package comprising a laminate according to any one of claims 1-8, wherein the sealing strength of the laminate to the top lidding film is at least 3 times stronger than the adhesion force of the laminate.
